# EUROPEAN PATENT SPECIFICATION

(11) **EP 1 116 658 B1**
(45) Date of publication and mention of the grant of the patent: **18.06.2003**
(21) Application number: 00830830.6
(22) Date of filing: 18.12.2000
(51) Int. Cl.: B65B 9/06, B65B 51/30

(54) **Apparatus and method for packaging products in a continuously fed film**
Vorrichtung und Verfahren zum Verpacken von Gegenständen in einer kontinuierlich zugeführten Folie
Dispositif et procédé pour emballer des objets dans une feuille alimentée en continu

(30) Priority: 16.12.1999 IT RM990760
(43) Date of publication of application: 18.07.2001
(73) Proprietor: Micromec s.n.c. di Prataiola e Bruschi, 52037 Sansepolcro AR (IT)
(72) Inventor: Bruschi, Fausto, 52037 Sansepolcro AR (IT); Prataiola, Alessandro, 52037 Sansepolcro AR (IT)
(74) Representative: Leone, Mario

(56) References cited:
- DE-A- 19 630 420
- US-A- 5 329 745
- US-A- 5 475 964

## Description

The present invention relates to a film-packaging apparatus and method.

In particular, this invention refers to an apparatus operating on a product flow, movable with a substantially constant speed along a feeding direction, and apt to package each of said products in respective casings of thermosensitive film, comprising a winding station, wherein said film is positioned with respect to said flow, a longitudinal welding station, to weld said film parallely to said feeding direction, and a cross welding station, to weld said film transversely to said feeding direction to obtain said casings, said cross welding station having at least one thermowelding member.

The present invention also refers to a method for packaging each product of a flow within a thermosensitive film casing, comprising a welding step, wherein said film is positioned with respect to said products, a longitudinal welding step, to weld longitudinal flaps of said film parallely to said flow, and a cross welding step, to weld cross portions of said film transversely to said flow by means of at least one thermowelding member.

Thanks to apparatuses as above specified, products such as magazines, books and covers in general are often packaged by enclosing each of them into a casing formed by a film of a thermosensitive material, for example thermoweldable plastic material such as polyethylene, PVC, polypropylene. These packaging apparatuses generally comprise several working stations, operating in sequence on a product flow. These working stations typically have movable members, which follow the motion of the products to be packaged in synchrony with the means moving said products and which may involve problems which could be clarified thanks to the description of the following example.

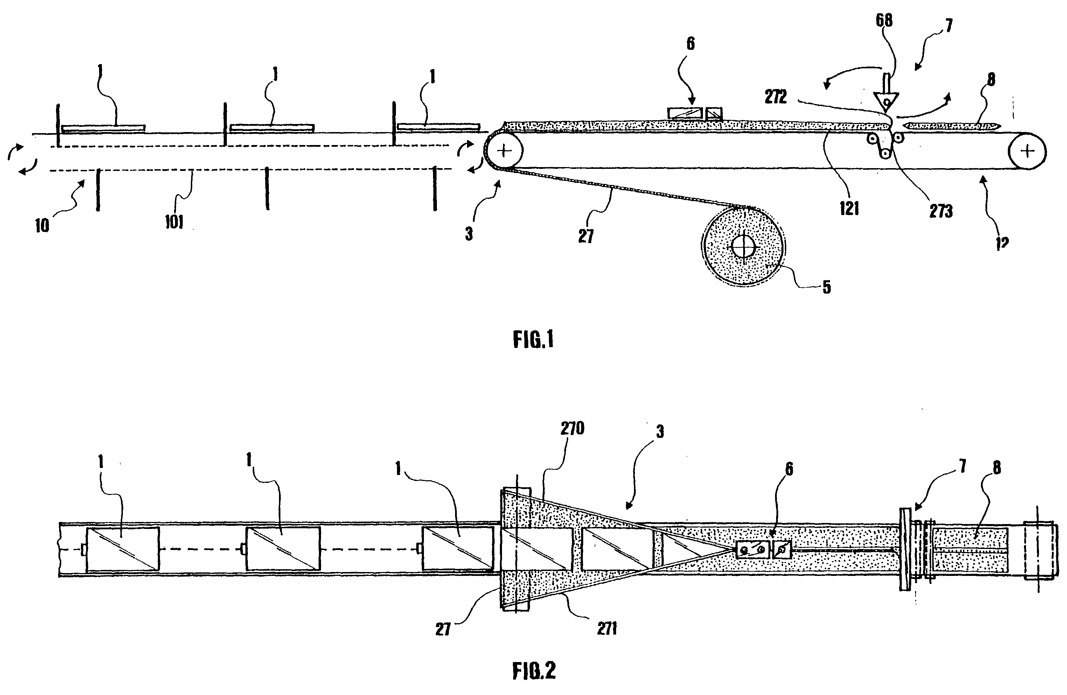

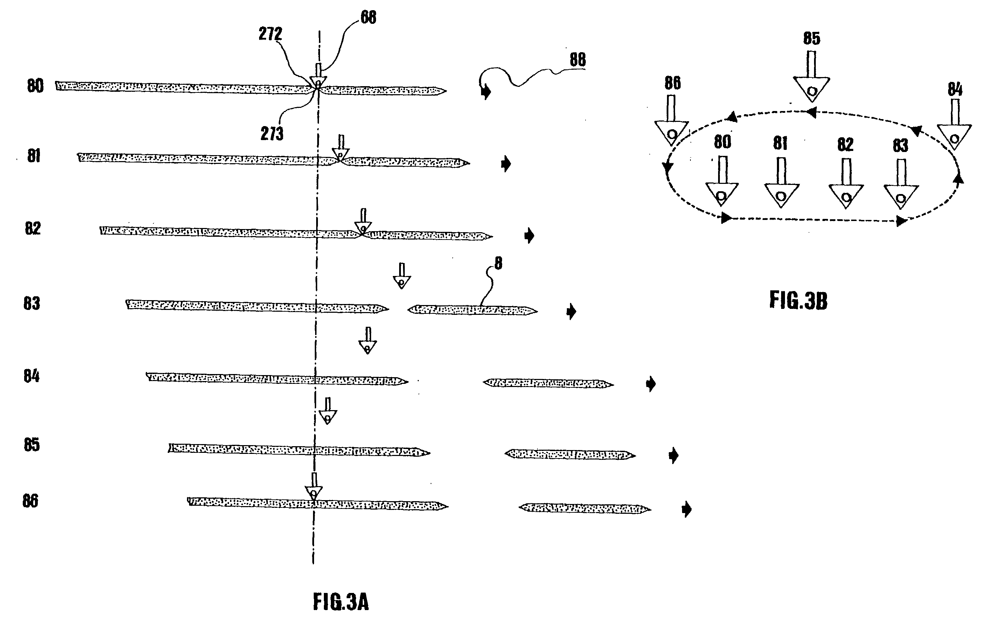

By simple way of example and not for limitative purposes of the prior art, a schematic representation of a packaging apparatus of the above mentioned type, on a lateral and top plan view respectively, is provided in the Figures 1 and 2. By referring to these Figures, the products to be packaged are each designated with 1. These products 1 are conveyed by one working station to the other by means of specific conveyance units, which therefore determine the above product flow. In particular, in Figure 1 a first conveyance unit 10 and a second conveyance unit 12 are shown, arranged in sequence and each comprising a conveyor belt, 101 and 121 respectively. On these conveyor belts the products 1 to be packaged are placed, according to a resting plane parallel to the feeding direction of the product flow. The direction orthogonal to the product flow and parallel too to this resting plane will be hereinafter mentioned as cross direction.

When the packaging apparatus is working at a steady rate, the conveyor belts 101 and 121 move with a substantially constant speed.

The products 1 to be packaged are placed on the first conveyance unit 10, according to modes which will be illustrated in greater detail hereinafter, and directed towards the second conveyance unit 12. At this second conveyance unit 12, the packaging apparatus comprises a working station 3, called winding station, wherein a film 27 of a thermosensitive material is positioned with respect to the product flow. This film 27 is supplied to this winding station 3 as continuous tape, which unwinds from a coil 5.

The winding station 3, therefore, has a film unwinding and deposition unit. This unit arranges the continuous tape of film 27 on the second conveyer belt 121, by properly placing it with respect to the product flow. Therefore, when the products 1 pass from one conveyance unit to the other, the continuous tape of film 27 is interplaced between the products 1 themselves and the second conveyance belt 121 whereon they are rested.

A specific folding unit, then, folds the continuous film tape around the products 1, so as a first longitudinal flap 270 and a second longitudinal flap 271 of the film 27 are overlapped one over the other. In this way, all the products 1 of the flow leave the winding station 3 wound in a kind of single tubular casing.

This flow, then, passes through a working station 6 called longitudinal welding station.

In this longitudinal welding station 6 the above mentioned first and second longitudinal flaps 270 and 271 are welded one to the other. In this way, the single tubular casing enclosing the product flow is longitudinally closed around the products 1 themselves. An example of longitudinal welding station is described in the Italian patent BO94U000191.

The packaging apparatus furthermore comprises a working station 7 called cross-welding station, wherein a cross welding between a first cross portion 272 and a second cross portion 273 of the film 27 is indeed performed, between each product 1 of the flow and the subsequent one. Each pair of cross portions 272 and 273 of the film 27 corresponds to a segment of the continuous tape of film 27 interplaced between two adjacent products 1 of the flow. In this way, from the above mentioned single tubular casing the single casings are formed, each designated with 8 and winding a single product 1 of the flow. This cross welding is generally pushed up to determine the detach of each casing 8 from the single tubular casing placed upstream thereof with respect to the product flow.

The cross welding station 7 has a thermowelding member 68, generally heated by electric resistors.

In order to produce a temporary fusion of the film 27 and an optimal cross welding between the above mentioned first and second cross portions 272 and 273 thereof, a well-determined and at a determined temperature heat quantity has to be transmitted to these portions. In fact, each type of thermosensitive film has a range of optimal fusion temperatures, which is comprised, for the most commonly utilized film, between 120 and 200 °C. In order to transmit the above mentioned predetermined heat quantity at the required temperature, the thermowelding member 68 must remain in contact with the cross portions of film 27 to be welded for a determined period of time. In order to utilize a product flow having a continuous and not stepping motion, the thermowelding member 68 must be movable in the feeding direction of the product flow itself.

The sequence of positions assumed by the thermowelding member 68 during the above mentioned cross-welding operation define a so-called welding cycle.

Still in order to give a not limitative example of prior art, a welding cycle example is schematically illustrated in Figures 3a and 3b. The direction and the versus of the product flow are designated with 88. Said welding cycle can be imagined to be divided into two main steps. In a first step, called contact step, the thermowelding member 68 is indeed in contact with the cross portions 272, 273 of film 27. In the contact step a real cross welding is performed, by transmitting heat by conduction between the thermowelding member 68 and the film 27. This contact starts when the thermowelding member 68 is in the first position designated with 80 and continues at the following positions 81 and 82.

As above said, this contact step must last sufficiently in order to transmit to the film 27 the heat quantity necessary for the fusion thereof, at the most suitable temperature for the material the film 27 itself is made of. The use of heat transmission by irradiation involves similar problems since it has to take place at a predetermined distance between the thermowelding member and the film.

Preferably, at the end of the contact step, also the detach of a casing 8 from the above mentioned single tubular casing will be produced, which packages the product 1 at the fourth position 83.

Once welding has been completed, a second step of the cross welding starts, called return step and corresponding to the positions designated with 84 and 85.

In this return step, the thermowelding member 68 has to move both in a direction orthogonal to the resting plane, to go away from the welded film 27, and in the direction of the product flow 1, with versus opposite thereto, to return in a position 86 useful for a new welding, that is coinciding with the first position 80.

By summarising what above described, during a whole cycle of cross welding the thermowelding member 68 must have a trajectory being the combination of two motion components, that is an alternative motion component along the feeding direction of the product flow to be packaged and a motion component in direction substantially orthogonal to the resting plane thereof.

Generally, this trajectory is obtained by electromechanical-type operating means, comprising a motor associated with transmission members, able to generate said trajectory with a substantially elliptical profile, incorporating for example an oscillating-glyph-type crank gear. In any case, because of the transmission members, the two motion components are not independent the one from the other. A packaging apparatus of this type is described for example in the European patent application EP-A2-209184.

The type of operating means used, by determining an elliptical trajectory with not-independent motion components, forces the thermowelding member to continuous accelerations and decelerations. Consequently, during the contact step the speed of the thermowelding member generally is not the same as the product flow speed. This causes imperfections in the cross welding.

In fact, if the speed of the thermowelding member is higher than that of the product flow, the film could tear or holes and/or irritating filament appendices could form. On the contrary, if the speed of the thermowelding member is lower than that of the product flow, the thermowelding member itself, by contrasting the motion of the film and of the products wound by it, could cause jammings or anyway formation of wrinklings in the welded film portions.

The fact that the operating means used determines an interdependence of the above mentioned two motion components causes another important drawback too, as illustrated hereinafter. The sizing of the operating means, and of the transmission members in particular, must be the result of a compromise between orthogonal excursion of the thermowelding member and excursion in the direction of the product flow. Therefore, the resulting trajectory of the thermowelding member is necessarily bound to a restricted range of heights and lengths of products to be packaged, thus making the packaging apparatus itself little versatile.

For the same reason, the apparatus is substantially bound to a restricted range of operating speeds and product sizes. In particular, a big change in the operating speed would involve a change in the contact period between film and thermowelding member, since, as above said, the requested heat quantity cannot be transmitted to the film by simply modifying the thermowelding member temperature. Changing the duration of the contact step would mean changing the thermowelding member stroke length in the direction of the flow, which is however bound to the above described elliptical trajectory, that is by the mechanics of the utilized operating means.

An alternative packaging apparatus is disclosed in US 5,475,964, which describes an apparatus for producing consistent transverse seals in a continuos shrink film packaging operation of trays. In particular, during the sealing operation two sealing bars are moved horizontally by means of a driveshaft and associated gear transmission means. The sealing bars are also moved vertically by means of air cylinders and associated chain transmission means.

Furthermore, DE 19630420 discloses a machine for making filled plastic bags, comprising transverse welding heads movable horizontally and vertically by linear motors.

The technical problem underlying the present invention is to provide a film-packaging apparatus and method allowing to overcome the drawbacks above mentioned with reference to the known art.

Such problem is solved by a film-packaging apparatus as claimed in claim 1.

According to the same inventive concept, the present invention also refers to a film-packaging method as claimed in claim 20.

The present invention provides some important advantages.

A first advantage is associated with the presence of operating means distinct therebetween and controlled independently the ones from the others for the motion in direction parallel and orthogonal to the product flow, respectively. In fact, such means allow obtaining a rectilinear trajectory of the thermowelding member with a speed equal to that of the product flow in the contact step of the cross welding cycle. Furthermore, the above mentioned operating means and the control unit associated therewith allow a punctual control of the thermowelding member motion. This produces a remarkable improvement in the quality of the cross welding itself.

Furthermore, based upon the above mentioned feature the packaging apparatus according to the invention is very flexible with respect to independent changes of the motion excursions in direction parallel and orthogonal to the product flow, respectively. This allows to fit in a simple and reliable way the thermowelding member motion to different thicknesses of the products to be packaged and to different operating speeds of the packaging apparatus.

Other advantages, features and application modes of the present invention will be evident from the following detailed description of some embodiments thereof, illustrated by way of examples and not for limitative purposes. The Figures of the enclosed drawings will be referred to, wherein, apart from the already mentioned Figures 1, 2 and 3a and 3b:
Fig. 4 shows a schematic view of an embodiment of the packaging apparatus according to the invention;
Fig. 5 shows a front view of a first embodiment of a cross welding station of the packaging apparatus according to the invention;
Fig. 6 shows a side view of the cross welding station of Fig. 5;
Fig. 7 shows a side view of the cross welding station of Fig. 5 during operation in a cross welding cycle;
Fig. 8a shows a side view of a second embodiment of a cross welding station of the packaging apparatus according to the invention;
Fig. 8a shows a side view of a third embodiment of a cross welding station of the packaging apparatus according to the invention; and

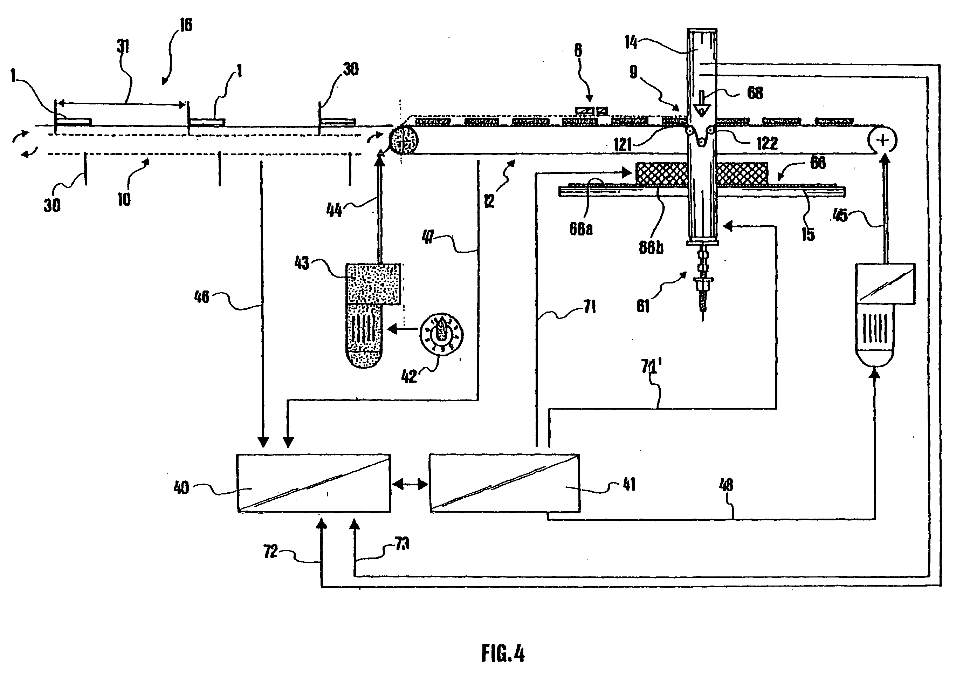

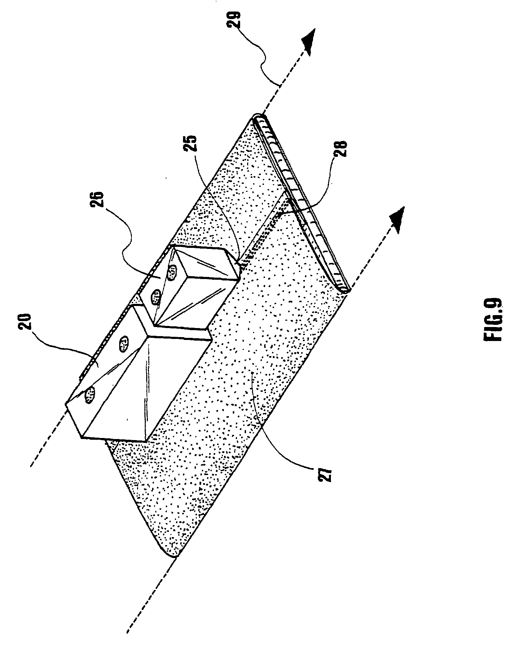

Fig. 9 shows a perspective view of another working station of the packaging apparatus of Fig. 4.

Hereinafter, components with function equal to those already described by referring to the known art will be designated with the same numeral reference.

By referring to the Fig. 4, a film-packaging apparatus works on a product flow 1, movable with a substantially constant speed along a feeding direction and each product to be packaged into a casing formed by a film made of thermosensitive material. To make representation easier, such film has not been shown in Fig. 4.

The packaging apparatus comprises a winding station, wherein the film is positioned with respect to the product flow, and a longitudinal welding station, for welding the longitudinal flaps of the film parallely to the above mentioned feeding direction. The general structure and functioning of these stations have been already described by referring to the packaging apparatuses of the known art, and therefore they have not been explicitly shown in Fig. 4.

The packaging apparatus according to the invention further comprises a cross welding station 9, for welding film portions transversely to the flow feeding direction. This cross welding station 9 comprises at least one thermowelding member 68. This thermowelding member 68 is moved parallely to the feeding direction of the product flow 1 by first operating means 66. The first operating means 66 has a first stator 66a, fixed with respect to the packaging apparatus, and a first support member 14, movable according to said feeding direction with respect to the first stator 66a. The thermowelding member 68 is furthermore moved orthogonally to the above mentioned flow by second operating means 61, distinct from the first operating means 66 and apt to near/take away the thermowelding member 68 to/from the film. The second operating means has a second stator, rigidly connected to the first support member 14, and a second support member, associated with the second stator. This second support member is connected to the thermowelding member 68 and movable in a direction orthogonal to the product flow. These first and second operating means, 66 and 61 respectively, are controlled independently the ones from the others by a control unit designated as a whole with 40. The motion components of the thermowelding member 68 respectively in parallel and orthogonal direction with respect to the feeding direction of the product flow are then independent the one from the other, as it will be described in greater detail hereinafter.

The flow products 1 are conveyed through the various working stations of the packaging apparatus by a first conveyance unit 10 and a second conveyance unit 12, placed in sequence to the first conveyance unit 10, as already illustrated by referring to the known art. In the present embodiment these conveyance units comprise each a horizontal conveyor belt, which for the second conveyance unit 12 is designated with 121. The products 1 are rested on these conveyor belts according to a substantially horizontal resting plane parallel to the flow. Consequently, the first operating means 66 will move the thermowelding member 68 in a substantially horizontal direction, whereas the second operating means 61 will move the thermowelding member in a substantially vertical direction.

The control unit 40 receives as input the operating parameters of the packaging apparatus. Some of these operating parameters, for example the sizes of the products to be packaged, the speed of the first conveyance unit 10, the properties of the packaging film and the length desired for the casing to be formed around each product, are set directly by an operator by a specific interface unit. Other operating parameters are instead measured by sensors placed at the different working stations of the packaging apparatus and automatically transmitted to the control unit 40. By processing all these operating parameters, the control unit 40 handles in an automatic and adaptive way the different working stations of the packaging apparatus, and in particular the cross welding cycle, as it will be described in greater detail hereinafter. To control the working stations of the packaging apparatus, the control unit 40 could utilize so-called "output" units, designated with 41, which in turn operate the first and second operating means 66 and 61 and possible other motors provided in the packaging apparatus.

The single working stations of the packaging apparatus of the present embodiment will be now described in greater detail, by still referring to the Figure 4.

The present embodiment provides an assembly station 16 of the products 1, schematically represented in Figure 4. This assembly station 16 enables to gather and assemble various components, which as a whole form a product 1 to be packaged. To this purpose, the assembly station 16 is of a modular type since along it various feeders can be mounted, each of them apt to place a component of the product 1 on the above mentioned first conveyance unit 10. For example, the assembly station 16 will provide a first picking unit to pick up the main component of the product, typically a magazine. The feeding station 16 can further comprise various sheet-putting units, apt to pick up additional components and place them on the magazine. The insertion of these additional members takes place while a product 1 which is being formed step by step is conveyed by the above mentioned first conveyance unit 10. In case depliants are wished to be inserted between a cover of the magazine and the first page thereof, a specific suction cup will raise the cover of the magazine and a bayonet placed in sequence to said suction cup will keep this cover raised during insertion of the above mentioned depliants by sheet-putting units. Along the first conveyance unit 10 it may also be provided: labelling machines, to provide labels carrying information about the product 1 to be packaged or the address of the addressee to whom it will be delivered; automatic printout cutters to feed particular documents (even coming from printers, such as statements of account and the likes); feeders for magazines fastened with staple or for depliants in a straight or folded format; and feeders for publications such as books, magazines or newspapers.

Furthermore, the assembly station 16 could comprise devices such as printers or folding systems, if a product has to be brought, before proceeding with the real packaging, from a flat shape to a folded shape.

The first conveyance unit 10 is driven by a first dedicated motor 43, through connections 44 of a conventional type. The first motor 43 is controlled by the control unit 40 by control connections of conventional type, not indicated in Fig. 4. The speed of this first motor 43, namely the conveyance speed of the products 1 on the first conveyance unit 10, can be set by an operator by a proper interface unit 42. This interface unit 42 could for example consist in an analogical potentiometer or in a digital small keypad equipped with a display. The operating parameters associated with the motion of the first conveyance unit 10 and with the position of the products 1 of the flow thereon are measured by first sensors 46 and transmitted to the control unit 40 by feedback connections of conventional type, designated too with 46 in Fig. 4. These first sensors 46 could be position and/or speed sensors, for example of encoder type.

The assembly station 16 then comprises a series of pushers 30 fastened on the first conveyance unit 10. These pushers 30 are equidistant at a fixed pitch 31, determining also the distance between two consecutive products 1 of the flow. This distance 31 will be therefore greater than the maximum length of the products which can be packaged into the relative packaging apparatus.

From the assembly station 16 the products 1 of the flow pass to the winding station. The modes with which, in this station, the products 1 are wound with the thermosensitive film have been already described with reference to the known art, and therefore they will be not repeated here. It is to be reminded however that in this winding station the products 1 are conveyed on the above mentioned second conveyance unit 12. This is driven by a second electromagnetic motor 45, for example of the so-called "brushless" type, distinct from the first motor 43. Even this second motor 45 is controlled by the control unit 40 by means of control connections of conventional type, designated with 48 in Fig. 4.

The winding station has furthermore second sensors 47, similar to the first sensors 46, which send signals to the control unit by a conventional feedback connection, designated too with 47 in Fig. 4. These signals refer to operating parameters related to the motion of the second conveyance unit 12 and to the position of the products 1 of the flow thereon.

Based upon the current operating parameters received as input, and in particular upon the speed of the first conveyance unit 10 set by the operator by the interface unit 42, the control unit 40 adjusts the speed of the second conveyance unit 12 of the winding station so that this is in a constant ratio with the speed of the first conveyance unit 10. To control these speeds, the control unit 40 processes, among other things, the feedback signals received by the first sensors 46 and by the second sensors 47. It is to be noted that the above mentioned speeds can be controlled and handled also independently one from the other. This is allowed by the fact that the first and second conveyance units can be driven independently one from the other, since each of them is equipped with its own motor. For example, at the beginning of the packaging apparatus operation, it could be convenient to let the second conveyance unit 12 unoperative, to wait for the assembly of an adequate number of products 1 on the first conveyance unit 10.

The above mentioned presence of independent motorisations for the conveyance units of the assembly and winding stations, instead of a single motor with interplaced transmission means, provides therefore a great working flexibility of the packaging apparatus, in particular as far as changes in its operating speed are concerned. This flexibility is further emphasized by the presence of the control unit 40. This control unit 40 furthermore, by automatically controlling the absolute and relative speed of the above mentioned conveyance units, avoids that speed manual adjustments be necessary, which would be long and not much precise.

From the winding station the products pass then, still conveyed on the conveyor belt of the second conveyance unit 12, to the longitudinal welding station. This station will be now described in greater detail by referring to Fig. 9. In this last Figure, the direction and the versus of the product flow are designated with arrows 29, and the thermosensitive film is designated with 27. The longitudinal welding station comprises two heatable bodies placed in sequence with respect to the product flow, and precisely a preheating body 20 and a welding body 26, placed adjacent to the preheating body 20 and downstream thereof with respect to the product flow. Both the preheating body 20 and the welding body 26 incorporate inside one or more electric resistors, controlled by a thermoregulator. This thermoregulator incorporates its own control device, and if necessary can be connected to the control unit 40.

The welding body 26 comprises in the lower part thereof a member 25 shaped as a wedge blended at the ends, apt to be in contact with longitudinal flaps of film to be welded. The preheating body 20 is placed in a raised position with respect to the welding body 26. This involves that, during the longitudinal welding operation, the above mentioned longitudinal flaps of film to be welded come in contact with the welding body 26 but, generally, not with the preheating body 20. In particular, during this longitudinal welding operation the flow products 1 enter this working station wound in the above mentioned single tubular casing, as illustrated by referring to the winding stations of the known art. The above mentioned longitudinal flaps of film to be welded firstly pass under the preheating body 20 and then come in contact with the wedge-shaped member 25 of the welding body 26. The preheating body 20 transmits to the film, tipically by irradiation and convention, a heat quantity necessary to prepare the film itself for the subsequent fusion by the welding body 26. To this purpose, the preheating body 20 generally works at a temperature close to but lower than the film fusion one. The welding body 26, by coming in contact with the above mentioned film longitudinal flaps, transmits, mainly by conduction, the additional heat quantity necessary to cause the film fusion and therefore the required longitudinal welding.

The longitudinal welding station also comprises third operating means (not represented in Figure), controlled by the control unit 40. These third operating means enables to vary the distance of the preheating body 20 from the underneath film. In particular, these third operating means will be automatically controlled by the control unit 40 when the speed of the second conveyance unit 12 is modified. The distance of the preheating body 20 from the film will be increased if the above mentioned speed has decreased and, viceversa, it will be decreased if the speed of the second conveyance unit 12 has increased. In this way, the preheating body 20 will always provide the same heat quantity to the film, independently from the operating speed of the apparatus. This flexibility of the longitudinal welding station with respect to the operating speed of the packaging apparatus represents another important advantage of the apparatus itself.

It will be also appreciated that, thanks to the presence of the preheating body 20, the welding body 26 may be manufactured with reduced size and mass. In fact, the welding body 26 must not provide the whole heat quantity necessary to fuse the film, but only a part thereof. Consequently, the welding body 26 will have a reduced thermal inertia, by improving the flexibility and the speed of the packaging apparatus. In substance, the possibility to have a welding body with low thermal inertia and the association thereof with a preheating body provide great adjustment possibility compared to when a single welding body is utilized. In particular, the transmission modes of the heat quantity necessary to fuse the film and the part thereof which has to be provided by each of the above mentioned two bodies can be controlled by the control unit 40, to fit them to the apparatus speed and to the film type. This may result very useful, for example, at the beginning of the apparatus operation, when the operative speed increases rapidly.

The longitudinal welding station also comprises an additional actuator (not represented in the Figures), for example of electropneumatic type, which enables to raise contemporarily both the preheating body 20 and the welding body 26. This actuator too is controlled by the control unit 40. This additional actuator is very useful when the second conveyance unit 12 is stopped and part of the products to be packaged are in the longitudinal welding station. The raising of the welding body 26 and of the preheating body 20 avoids that the film to be welded and/or the product wound therein are damaged due to an excessive quantity of transmitted heat. When the second conveyance unit 12 is restarted, the control unit 40 will automatically drive the additional actuator, to make the preheating body 20 and the welding body come down again.

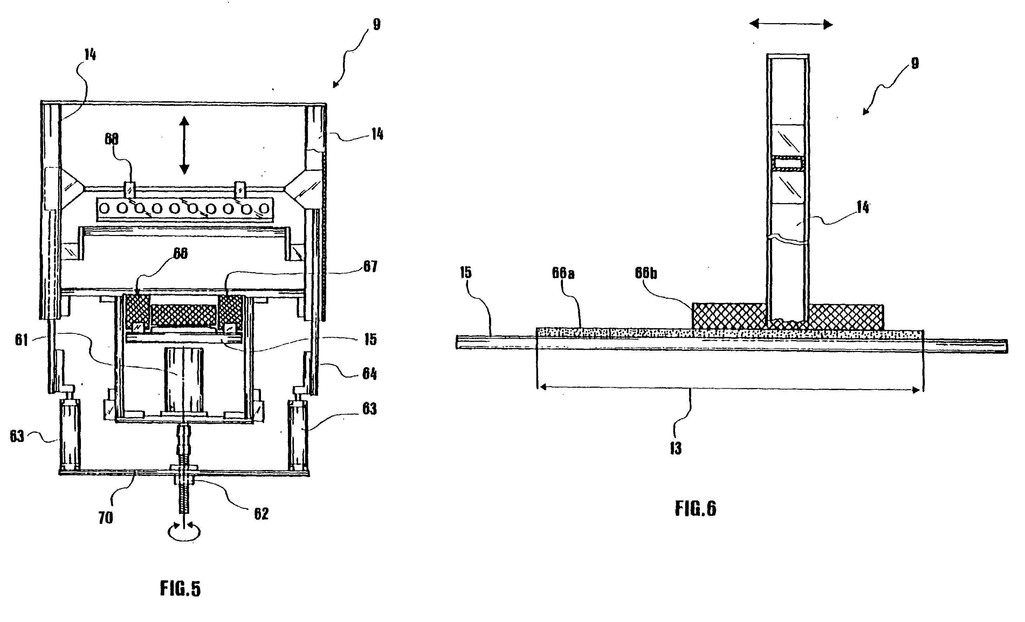

From the longitudinal welding station the products 1 pass then, still on the second conveyance unit 12, to the cross welding station 9. A first embodiment of this cross welding station will be now described in greater detail by referring to the Figures 5 and 6.

In this first embodiment, the first operating means 66 comprises a linear-type motor, designated too with 66. This linear motor 66 has a first set of magnets 66a, which constitutes the above mentioned first stator and is fastened to a chassis 15 of the packaging apparatus. This first set of magnets 66a has a longitudinal size, that is in direction parallel to the product flow, designated with 13 in Figure 6. In the present embodiment, the magnets of this first set 66a are permanent magnets, placed on a horizontal plane parallel to the resting plane of the products 1 on the conveyance unit 12.

The linear motor 66 then comprises a second set of magnets 66b, faced on the magnets of the first set 66a and movable with respect thereto. This second set of magnets 66b is rigidly connected to the first support member 14. The connection between first support member 14 and second set of magnets 66b is schematically represented in Figure 5 and designated with 67. In the present embodiment, the magnets of this second set of magnets 66b are electromagnets.

For a better operating regularity, the magnets of these first and second set, 66a and 66b respectively, will be placed in an equidistant way one from the other.

The intensity and polarity of the magnetic field produced by the magnets of the first and/or second set, 66a and 66b respectively, are adjusted by the control unit 40, by the output units 41. In particular, in the present embodiment the electromagnets of the second set 66b are controlled by the control unit 40 so that, during operation, the interaction between the magnetic field produced by these electromagnets of the second set 66b and the magnetic field produced by the permanent magnets of the first set 66a determines a translation in the direction of the product flow of the second set of magnets 66b and of the first support member 14 fixed thereto with respect to the chassis 15. The maximum excursion of this translation is determined by the longitudinal size 13 of the first set of magnets 66a.

The second operating means 61 is brought onto the first support member 14 and is therefore movable integrally therewith. Therefore, these second operating means 61 is moved horizontally, together with the thermowelding member 68, by the first operating means 66.

In the present embodiment, the second operating means 61 comprises an electromagnetic motor, for example of the so-called "brushless" type, designated too with 61, apt to cause the motion in vertical direction of the thermowelding member 68. The stator of this electromagnetic motor 61 constitutes the above mentioned second stator of the second operating means. This electromagnetic motor 61 is connected to an endless screw-system 62, which transforms the rotating motion generated by the motor itself into a translatory motion in vertical direction, according to modes well known to the person skilled in the art. The endless screw-system 62 is constituted by a screw and a seat 70 for this screw. This screw seat 70 constitutes the above mentioned second support member of the second operating means 61. The screw seat 70 is connected with two uprights 64, in turn integral with the thermowelding member 68, to determine, according to the screw rotation versus within its own seat 70, a raising or lowering of the thermowelding member 68 itself.

Preferably, between the screw seat 70 and the uprights 64 additional actuation means is interplaced, for example two pneumatic cylinders 63, controlled by the control unit 40. These pneumatic cylinders 63 are apt to cause the forced raising of the thermowelding member 68, and therefore the moving away thereof from the film to be packaged, in emergency situations or when the apparatus is unoperative.

By referring again to the Figure 4, also idle rollers 122 are carried onto the first support member 14, apt to locally deviate the course of the conveyor belt 121 of the second conveyance unit 12. This is necessary during the cross welding operation, since the thermowelding member 68 must abut a striker member (not shown in the figures), arranged under the welded film and carried too onto the first support member 14.

The first and second operating means, 66 and 61 respectively, receive control electronic signals by the control unit 40 by connections of conventional type, 71 and 71' respectively for the first and the second operating means 66 and 61. In turn, these first and second operating means 66 and 61 have respective feedback means 72 and 73 to send electronic signals to the control unit, apt to provide information related to the instantaneous position of the thermowelding member 68.

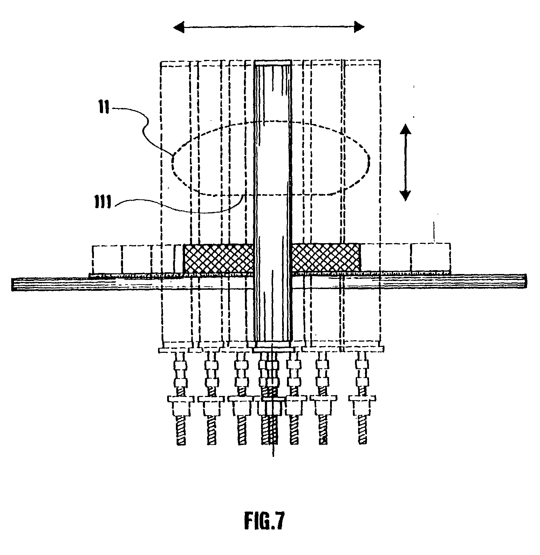

The operation of the cross welding station will be now described with greater details by referring to Figure 7. In this latter Figure the trajectory followed by the thermowelding member 68 is represented in sketches and designated as a whole with 11. Reference will be made to the steps of the cross welding cycle introduced by referring to the known art.

During the contact step, only the first operating means 66 is driven. The thermowelding member 68 is therefore moved according to a substantially rectilinear trajectory 111 in the direction of the product flow. Based on the control signals sent by the control unit 40 to the first operating means 61 by the connection 71, the thermowelding member 68 will move on this trajectory 111 with speed equal to the one of the product flow 1 conveyed by the conveyance unit 12. The control unit 40 may also be programmed so that at the end of the contact step a small horizontal acceleration of the thermowelding member 68 is produced with respect to the product flow. This favours the detach of the just formed casing 8 from the remaining single tubular casing.

At the end of the contact step, the control unit 40 will activate also the second operating means 61, so that the thermowelding member 68 moves, in the return step, with a non-null motion component in vertical direction.

The already mentioned advantages associated with the fact of having first and second operating means distinct and controlled independently the ones from the others, apt to produce each a motion component of the thermowelding member, could be at this point mostly appreciated.

First of all, the packaging apparatus is very flexible with respect to changes of its operating speed and of the thickness of the products to be packaged. In particular, upon changing the speed of the second conveyance unit 12, the horizontal motion excursion of the thermowelding member 68 could be automatically changed to change the duration of the contact step. To this purpose, the control unit 40 could control a change of the stroke of the electromagnets of the second set 66b on the magnets of the first set 66a. In this way, always the same heat quantity and at the same temperature could be transmitted to the film, independently from the operating speed of the packaging apparatus.

Also the motion vertical excursion of the thermowelding member 68 could be automatically modified. In fact, the control unit 40 could control a change of the stroke of the endless-screw system 62 of the second operating means 61, in order to allow packaging products with different thickness.

Furthermore, the control unit 40 could handle automatically the acceleration entity and direction of the thermowelding member 68 during the return step, so as to optimize the packaging speed of products 1 with different length.

The packaging apparatus according to the invention enables therefore extremely flexible and accurate automatic adjustments of the motion speed and excursion of the thermowelding member 68.

Another advantage of the packaging apparatus is associated with the fact that the first operating means 66 does not require mechanical-type transmission members. This completely eliminates the problems associated with mechanical backlash, frictions and inertia, typical instead of the packaging apparatuses of the known art, by favouring packaging precision and operating speed increase of the apparatus.

The fact of having first and second operating means distinct and controlled independently the ones from the others, enables to provide, in the cross welding station of the packaging apparatus according to the invention, more than one thermowelding member. By referring to the Figure 8a, based upon a second embodiment of the cross welding station of the packaging apparatus according to the invention, two thermowelding members, 68' and 68" respectively, could for example be provided, fastened on a support arm 247 of the first support member 14. These two thermowelding members 68' and 68" will be connected to said support arm 247 at a mutual distance, in the feeding direction of the product flow, equal to the length of the casing 8 to be obtained. In this way, during the contact step of a cross welding cycle these thermowelding members 68' and 68" will be one upstream and the other downstream of a certain product 1 to be packaged with respect to the flow feeding direction.

Preferably, the above mentioned distance between the two thermowelding members will be adjustable, so that to guarantee a versatility of the packaging apparatus with respect to products of different length.

This second embodiment with two thermowelding members enables to increase the operating speed of the packaging apparatus, since in each cross welding cycle two products instead of one will be packaged.

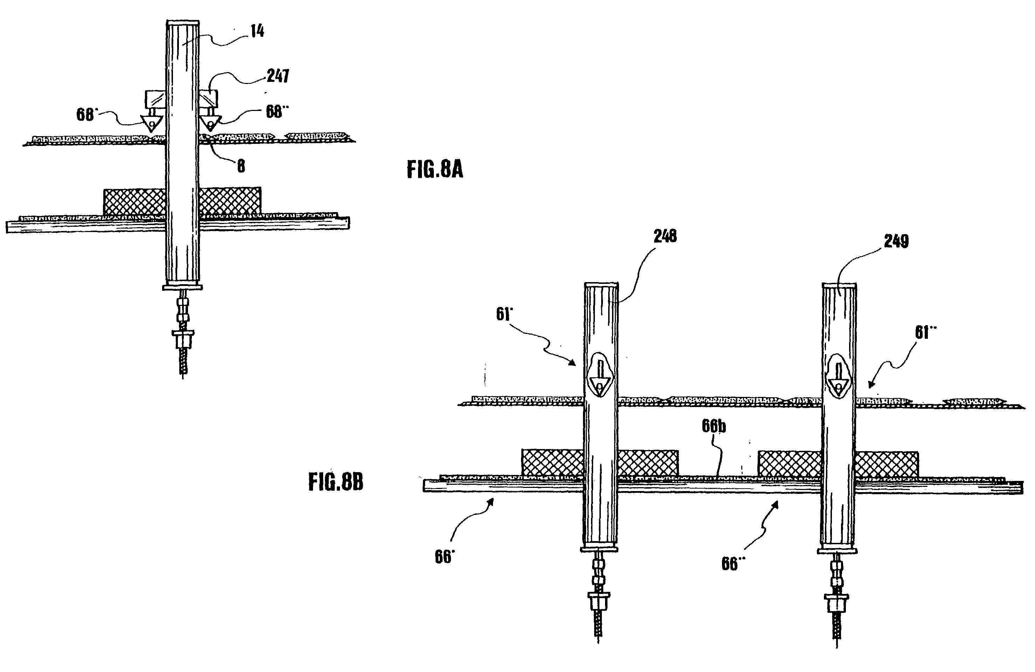

It will be appreciated that several welding groups, each formed by respective first and second operating means and by at least one respective thermowelding member, according to what described by referring to the first and second embodiment of the cross welding station, could be placed in sequence along the second conveyance unit 12, and driven in series or in parallel one to the other. A third embodiment of the cross welding station is illustrated in the Figure 8b. Based upon this embodiment, a first and a second welding group, 248 and 249 respectively, each constituted by respective first operating means 66', 66", second opearating means 61", 61", and by a respective thermowelding member 68', 68", are arranged in sequence along the feeding direction of the product flow, and in particular one upstream and the other downstream of a certain product 1 to be packaged with respect to the flow feeding direction. Each welding group 248, 249 can be controlled by the control unit 40 independently from the other group. In particular, the two welding groups 248 and 249 will be syncronized so as to perform in optimal way the various steps of the cross welding cycle.

Advantageously, the respective first operating means 66', 66" of the first and second welding group 248, 249 will comprise a first common stator, formed by a single first set of magnets 66b, as shown in Figure 8b.

The main advantage of this third embodiment lies in the possibility of increasing the operating speed of the packaging apparatus, thanks to the presence of two thermowelding members instead of one only, without increasing the mass, and therefore the inertia, of a single first support member.

At this point it will be appreciated that the automatic control of the packaging apparatus by the control unit 40 provides a long series of important advantages, associated with the extremely wide range of adjustment possibilities of the apparatus, in particular of the cross welding station. For example, preparation of the packaging apparatus is very rapid, since it is sufficient that an operator sets the operating parameters at the beginning of a working cycle of the apparatus by the specific interface unit, and the control unit 40 will automatically handle all the operations of the working stations. In particular, by referring to the cross welding station, the control unit 40 could perform an automatic timing of the thermowelding member 68 on the portions of film to be welded, by placing this member exactly in the median point of the space interplaced between two consequent products 1 of the flow. This timing is particularly important if the film is printed and each casing 8 must have printed film parts in predetermined locations.

The present invention has been sofar described by referring to the preferred embodiments. It is to be meant that other embodiments may exist belonging to the same inventive core, all however comprised within the protective scope of the herebelow reported claims.

## Claims

1. A film-packaging apparatus operating on a product flow movable with a substantially constant speed along a feeding direction and apt to package each of said products (1) in respective casings (8) of thermosensitive film (27), comprising:
- a winding station, wherein said film (27) is positioned with respect to said flow;
- a longitudinal welding station, to weld said film (27) parallely to said feeding direction;
- a cross welding station (9), to weld said film (27) transversely to said feeding direction to obtain said casings (8), said cross welding station (9) in its turn comprising at least one thermowelding member (68), first operating means (66) to move said thermowelding member (68) according to said feeding direction and apt to produce a substantially rectilinear trajectory (111) with a speed equal to that of said product flow, which first operating means has a first support member (14) movable according to said feeding direction, and second operating means (61), distinct from said first operating means (66) and comprising a stator, connected to said first support member (14), and a second support member (62), associated to said stator, whereto said thermowelding member (68) is connected and that is movable orthogonally to said product flow; and
- a control unit (40), to control said first (66) and second (61) operating means independently the one from the other,
**characterised in that** said first operating means comprises a linear motor (66) comprising a first set of magnets (66a), fixed with respect to the packaging apparatus, a second set of magnets (66b), facing said first set of magnets (66a) and movable with respect thereto parallely to said flow, said first support member (14) being rigidly connected to said second set of magnets,
and **in that** said first (66) and second (61) operating means show respective feedback means (72, 73) to supply to said control unit (40) information about the instantaneous position of said thermowelding member (68),
the arrangement being such that the excursion and speed of said thermowelding member (68), both in direction parallel and orthogonal to said product flow, are punctually controllable, thereby allowing to produce an acceleration thereof parallely to said product flow at the end of the transverse welding to favour the detach of a casing (8) from the remaining film (27).

2. The apparatus according to claim 1, wherein said control unit (40) is apt to determine the intensity and/or polarity of the magnetic field produced by said first (66a) and/or second (66b) set of magnets.

3. The apparatus according to claim 1 or 2, wherein said first set of magnets (66a) comprises permanent magnets and said second set of magnets (66b) comprises electromagnets.

4. The apparatus according to any of the preceding claims, wherein the magnets of said first (66a) and second (66b) set are placed in an equidistant way the one from the other.

5. The apparatus according to any of the preceding claims, wherein said stator is of electromagnetic-motor type, said second support member being a screw seat (70) of an endless screw system (62) connected to said electromagnetic motor, which is movable orthogonally to said product flow.

6. The apparatus according to claim 5, wherein said second operating means (61) comprises actuation means (63), interplaced between said screw seat (70) and said thermowelding member (68), to cause a forced raising of said thermowelding member (68).

7. The apparatus according to claim 6, wherein said actuation means comprises pneumatic cylinders (63).

8. The apparatus according to any of the preceding claims, wherein said feeding direction is substantially horizontal and said direction orthogonal to said flow is substantially vertical.

9. The apparatus according to any of the preceding claims, wherein said longitudinal welding station comprises two heatable bodies (20, 26), arranged in sequence one to the other with respect to said product flow.

10. The apparatus according to claim 9, wherein said longitudinal welding station comprises a preheating body (20), placed in a raised position with respect to said flow, and a welding body (26), placed downstream of said preheating body (20) with respect to said flow and apt to come into contact with said film (27).

11. The apparatus according to claim 10, wherein said preheating body (20) and welding body (26) incorporate a thermoregulator having its own control device and which can be driven by said control unit (40).

12. The apparatus according to claim 10 or 11, wherein said longitudinal welding station comprises further operating means, driven by said control unit (40), to vary the distance of said preheating body (20) from said film (27).

13. The apparatus according to any of claims 10 to 12, wherein said longitudinal welding station comprises an additional actuator, controlled by said control unit (40), to raise contemporarily said preheating body (20) and said welding body (26).

14. The apparatus according to any of the preceding claims, comprising an assembly station (16) to assemble said products (1) on a first conveyance unit (10), said winding station positioning said film (27) with respect to said products (1) on a second conveyance unit (12), wherein said first conveyance unit (10) is driven by a first motor (43) and said second conveyance unit (12) is driven by a second motor (45), distinct from said first motor (43), said first (43) and second (45) motor having respective control connections with said control unit (40).

15. The apparatus according to claim 14, wherein said first conveyance unit (10) comprises first sensors (46) and said second conveyance unit (12) comprises second sensors (47), said first (46) and second sensors (47) being apt to send feedback signals to said control unit (40) by means of respective feedback connections.

16. The apparatus according to claim 15, wherein said first (46) and second sensors (47) are position and/or speed sensors.

17. The apparatus according to any of the preceding claims, wherein said cross welding station (7) comprises two thermowelding members (68', 68"), fastened on a support arm (247) of said first support member (14), at a mutually adjustable distance in said feeding direction.

18. The apparatus according to any of the preceding claims, wherein said cross welding station (7) comprises a first (248) and a second (249) welding group, placed in sequence along said feeding direction of said product flow, each of said first (248) and second (249) welding group comprising respective linear motors (66', 66"), operating means (61', 61"), and a respective thermowelding member (68', 68"), said first (248) and second (249) welding group being controlled by said control unit (40).

19. The apparatus according to claim 18, wherein the linear motors (66', 66") of said first (248) and second (249) welding group comprise a common single first set of magnets (66b).

20. A film-packaging method, to package each product (1) of a flow in a casing (8) of thermosensitive film (27), comprising a winding step, wherein said film (27) is positioned with respect to said products (1), a longitudinal welding step, to weld longitudinal flaps of said film (27) parallely to said flow, and a cross welding step, to weld cross portions (272, 273) of said film (27) transversely to said flow by means of at least one thermowelding member (68), which cross welding step comprises in turn:
- a contact step between said thermowelding member (68) and said cross portions (272, 273) of said film (27), wherein said thermowelding member (68) is moved with a speed equal to the speed of said product flow according to a substantially rectilinear trajectory (111) in the direction of said product flow; and
- a return step, wherein said thermowelding member (68) is moved both orthogonally to said product flow and in parallel therewith,
**characterized in that** the above cross welding step provides a punctual control of the excursion and speed of said thermowelding member (68), both in direction parallel and orthogonal to said product flow, thereby allowing to produce an acceleration thereof parallely to said product flow at the end of said contact step to favour the detach of a casing (8) from the remaining film (27), and **in that** said contact step is obtained by controlling the magnetic field between a first, stationary set of magnets and a second set of magnets, which second set is movable parallely to said flow with respect to said first set and is connected to said thermowelding member.

## Patentansprüche

1. Folienverpackungsvorrichtung, die auf einen Erzeugnisstrom einwirkt, der sich mit einer im Wesentlichen konstanten Geschwindigkeit in einer Zuführrichtung bewegt, und sich dazu eignet, jedes der Erzeugnisse (1) in entsprechende Umhüllungen (8) aus wärmeempfindlicher Folie (7) zu verpacken, und die umfasst:
eine Wickelstation, in der die Folie (27) in Bezug auf den Strom positioniert wird;
eine Längs-Schweißstation zum Schweißen der Folie (27) parallel zu der Zuführrichtung;
eine Quer-Schweißstation (9) zum Schweißen der Folie (27) quer zu der Zuführrichtung, um die Umhüllungen (8) herzustellen, wobei die Quer-Schweißstation (9) ihrerseits wenigstens ein Thermoschweißelement (68), eine erste Betätigungseinrichtung (66) zum Bewegen des Thermoschweißelementes (68) entsprechend der Zuführrichtung, die sich dazu eignet, eine im Wesentlichen geradlinige Bahn (111) mit einer Geschwindigkeit zu erzeugen, die der des Erzeugnisstroms gleich ist, wobei die erste Betätigungseinrichtung ein erstes Trageelement (14) aufweist, das entsprechend der Zuführrichtung bewegt werden kann, sowie eine zweite Betätigungseinrichtung (61) umfasst, die von der ersten Betätigungseinrichtung (66) getrennt ist und einen Ständer, der mit dem ersten Trageelement (14) verbunden ist, sowie ein zweites Trageelement (62) umfasst, das zu dem Stator gehört, mit dem das Thermoschweißelement (68) verbunden ist, und das rechtwinklig zu dem Erzeugnisstrom bewegt werden kann;
eine Steuereinheit (40), die die erste (66) und die zweite (61) Betätigungseinrichtung unabhängig von einander steuert,
**dadurch gekennzeichnet, dass** die erste Betätigungseinrichtung einen Linearmotor (66) umfasst, der eine erste Gruppe von Magneten (66a), die in Bezug auf die Verpackungsvorrichtung stationär sind, eine zweite Gruppe von Magneten (66b) umfasst, die der ersten Gruppe von Magneten (66a) zugewandt sind, und in Bezug darauf parallel zu dem Strom bewegt werden können, wobei das erste Trageelement (14) starr mit der zweiten Gruppen von Magneten verbunden ist,
und dass die erste (66) sowie die zweite (61) Betätigungseinrichtung entsprechende Rückkoppelungseinrichtungen (72, 73) aufweisen, die der Steuereinheit (40) Informationen über die momentane Position des Thermoschweißelementes (68) zuführen,
wobei die Anordnung so ist, dass die Auslenkung und die Geschwindigkeit des Thermoschweißelementes (68) in der Richtung sowohl parallel als auch rechtwinklig zu dem Erzeugnisstrom punktuell gesteuert werden können, so dass eine Beschleunigung desselben parallel zu dem Erzeugnisstrom am Ende des Querschweißens erzeugt werden kann, um das Ablösen einer Umhüllung (8) von der restlichen Folie (27) zu fördern.

2. Vorrichtung nach Anspruch 1, wobei die Steuereinheit (40) sich dazu eignet, die Stärke und/oder Polarität des Magnetfeldes zu bestimmen, das von der ersten (66a) und/oder der zweiten (66b) Gruppe von Magneten erzeugt wird.

3. Vorrichtung nach Anspruch 1 oder 2, wobei die erste Gruppe von Magneten (66a) Permanentmagneten umfasst und die zweite Gruppe von Magneten (66b) Elektromagneten umfasst.

4. Vorrichtung nach einem der vorangehenden Ansprüche, wobei die Magneten der ersten (66a) und der zweiten (66b) Gruppe gleichmäßig voneinander beabstandet angeordnet sind.

5. Vorrichtung nach einem der vorangehenden Ansprüche, wobei der Ständer vom Elektromotortyp ist und das zweite Trageelement eine Spindelaufnahme (70) eines Endlosspindelsystems (62) ist, das mit dem Elektromotor verbunden ist, die rechtwinklig zu dem Erzeugnisstrom bewegt werden kann.

6. Vorrichtung nach Anspruch 5, wobei die zweite Betätigungseinrichtung (61) eine Stelleinrichtung (63) umfasst, die zwischen der Spindelaufnahme (70) und dem Thermoschweißelement (68) angeordnet ist, um zwangsweises Anheben des Thermoschweißelementes (68) zu bewirken.

7. Vorrichtung nach Anspruch 6, wobei die Stelleinrichtung Druckluftzylinder (68) umfasst.

8. Vorrichtung nach einem der vorangehenden Ansprüche, wobei die Zuführrichtung im Wesentlichen horizontal ist und die Richtung rechtwinklig zu dem Strom im Wesentlichen vertikal ist.

9. Vorrichtung nach einem der vorangehenden Ansprüche, wobei die Längs-Schweißstation zwei beheizbare Körper (20, 26) umfasst, die aufeinanderfolgend in Bezug auf den Erzeugnisstrom angeordnet sind.

10. Vorrichtung nach Anspruch 9, wobei die Längs-Schweißstation einen Vorheizkörper (20), der sich an einer erhöhten Position in Bezug auf den Strom befindet, sowie einen Schweißkörper (26) umfasst, der stromab von dem Vorheizkörper (20) in Bezug auf den Strom angeordnet ist und sich dazu eignet, mit der Folie (27) in Kontakt zu kommen.

11. Vorrichtung nach Anspruch 10, wobei der Vorheizkörper (20) und der Schweißkörper (26) einen Wärmeregler enthalten, der seine eigene Steuervorrichtung aufweist und von der Steuereinheit (40) gesteuert werden kann.

12. Vorrichtung nach Anspruch 10 oder 11, wobei die Längs-Schweißstation eine weitere Betätigungseinrichtung umfasst, die von der Steuereinheit (40) gesteuert wird, um den Abstand des Vorheizkörpers (20) zu der Folie (27) zu ändern.

13. Vorrichtung nach einem der Ansprüche 10 bis 12, wobei die Längs-Schweißstation ein zusätzliches Stellglied umfasst, das von der Steuereinheit (40) gesteuert wird, um den Vorheizkörper (20) und den Schweißkörper (26) gleichzeitig anzuheben.

14. Vorrichtung nach einem der vorangehenden Ansprüche, die eine Zusammenfassstation (16) zum Zusammenfassen der Erzeugnisse (1) auf einer ersten Fördereinheit (10) umfasst, wobei die Wickelstation den Film (27) in Bezug auf die Erzeugnisse (1) auf einer zweiten Fördereinheit (12) positioniert, wobei die erste Fördereinheit (10) von einem ersten Motor (43) angetrieben wird und die zweite Fördereinheit (12) von einem zweiten Motor (45) angetrieben wird, der von dem ersten Motor (43) getrennt ist, wobei der erste (43) und der zweite (45) Motor entsprechende Steuerverbindungen mit der Steuereinheit (40) haben.

15. Vorrichtung nach Anspruch 14, wobei die erste Fördereinheit (10) erste Sensoren (46) umfasst und die zweite Fördereinheit (12) zweite Sensoren (47) umfasst, wobei die ersten (46) und die zweiten Sensoren (47) sich dazu eignen, Rückkoppelungssignale über entsprechende Rückkoppelungsverbindungen zu der Steuereinheit (40) zu senden.

16. Vorrichtung nach Anspruch 15, wobei die ersten (46) und die zweiten Sensoren (47) Positions- und/oder Geschwindigkeitssensoren sind.

17. Vorrichtung nach einem der vorangehenden Ansprüche, wobei die Quer-Schweißstation (7) zwei Thermoschweißelemente (68', 68") umfasst, die an einem Tragearm (247) des ersten Trageelementes (14) in einem zueinander verstellbaren Abstand in der Zuführrichtung befestigt sind.

18. Vorrichtung nach einem der vorangehenden Ansprüche, wobei die Quer-Schweißstation (7) eine erste (248) und eine zweite (249) Schweißgruppe umfasst, die aufeinanderfolgend in der Zuführrichtung des Erzeugnisstroms angeordnet sind, wobei die erste (248) und die zweite (249) Schweißgruppe entsprechende Linearmotoren (66', 66"), Betätigungseinrichtungen (61'. 61") und ein entsprechendes Thermoschweißelement (68', 68") umfassen und die erste (248) sowie die zweite (249) Schweißgruppe von der Steuereinheit (40) gesteuert werden.

19. Vorrichtung nach Anspruch 18, wobei die Linearmotoren (66', 66") der ersten (248) und der zweiten (249) Schweißgruppe eine gemeinsame einzelne erste Gruppe von Magneten umfassen.

20. Folienverpackungsverfahren zum Verpacken jedes Erzeugnisses (1) eines Stroms in einer Umhüllung (8) aus wärmeempfindlicher Folie (27), das einen Wickelschritt, in dem die Folie (27) in Bezug auf die Erzeugnisse (1) positioniert wird, einen Längs-Schweißschritt zum Schweißen von Längsbändem der Folie (27) parallel zu dem Strom und einen Quer-Schweißschritt zum Schweißen von Querabschnitten (272, 273) der Folie (27) quer zu dem Strom mit wenigstens einem Thermoschweißelement (68) umfasst, wobei der Quer-Schweißschritt seinerseits umfasst:
einen Kontaktschritt zwischen dem Thermoschweißelement (68) und den Querabschnitten (272, 273) des Films (27), wobei das Thermoschweißelement (68) mit einer Geschwindigkeit, die der Geschwindigkeit des Erzeugnisstroms gleich ist, entsprechend einer im Wesentlichen geradlinigen Bahn (111) in der Richtung des Erzeugnisstroms bewegt wird; und
einen Rückführschritt, in dem das Thermoschweißelement (68) sowohl rechtwinklig zu dem Erzeugnisstrom als auch parallel dazu bewegt wird,
**dadurch gekennzeichnet, dass** der obige Quer-Schweißschritt eine punktuelle Steuerung der Auslenkung und der Geschwindigkeit des Thermoschweißelementes (68) in einer Richtung sowohl parallel als auch rechtwinklig zu dem Erzeugnisstrom ermöglicht, so dass eine Beschleunigung desselben parallel zu dem Erzeugnisstrom am Ende des Kontaktschritts erzeugt werden kann, um das Ablösen einer Umhüllung (8) von der verbleibenden Folie (27) zu fördern, und dadurch, dass der Kontaktschritt ausgeführt wird, indem das Magnetfeld zwischen einer ersten, stationären Gruppe von Magneten und einer zweiten Gruppe von Magneten gesteuert wird, wobei die zweite Gruppe parallel zu dem Strom in Bezug auf die erste Gruppe bewegt werden kann und mit dem Thermoschweißelement verbunden ist.

## Revendications

1. Dispositif de conditionnement par film agissant sur un flux de produits mobiles à une vitesse sensiblement constante le long d'une direction d'alimentation, et capable de conditionner chacun desdits produits (1) dans des enveloppes respectives (8) constituées d'un film thermosensible (27), comportant :
- un poste d'enroulement, dans lequel ledit film (27) est positionné par rapport audit flux,
- un poste de soudage longitudinal, pour souder ledit film (27) parallèlement à ladite direction d'alimentation,
- un poste de soudage transversal (9), pour souder ledit film (27) transversalement à ladite direction d'alimentation pour obtenir lesdites enveloppes (8), ledit poste de soudage transversal (9) comportant à son tour au moins un élément de thermosoudage (68), des premiers moyens d'actionnement (66) pour déplacer ledit élément de thermosoudage (68) selon ladite direction d'alimentation, et capables de produire une trajectoire sensiblement rectiligne (111) à une vitesse égale à celle dudit flux de produits, premiers moyens d'actionnement qui ont un premier élément de support (14) mobile selon ladite direction d'alimentation, et des seconds moyens d'actionnement (61) distincts desdits premiers moyens d'actionnement (66), et comportant un stator connecté audit premier élément de support (14), et un second élément de support (62) associé audit stator, là où ledit élément de thermosoudage (68) est connecté et qui est mobile perpendiculairement audit flux de produits, et
- une unité de commande (40), pour commander lesdits premiers (66) et seconds (61) moyens d'actionnement indépendamment les uns des autres,
**caractérisé en ce que** lesdits premiers moyens d'actionnement comportent un moteur linéaire (66) comportant un premier ensemble d'aimants (66a), fixé par rapport au dispositif de conditionnement, un second ensemble d'aimants (66b), en vis-à-vis dudit premier ensemble d'aimants (66a), et mobile par rapport à celui-ci parallèlement audit flux, ledit premier élément de support (14) étant connecté de manière rigide audit second ensemble d'aimants,
et **en ce que** lesdits premiers (66) et seconds (61) moyens d'actionnement représentent des moyens de rétroaction respectifs (72, 73) pour alimenter ladite unité de commande (40) en informations concernant la position instantanée dudit élément de thermosoudage (68),
l'agencement étant tel que le déplacement et la vitesse dudit élément de thermosoudage (68), parallèlement et perpendiculairement audit flux de produits, peuvent être commandés de manière ponctuelle, en permettant ainsi de produire une accélération de celui-ci parallèlement audit flux de produits à la fin du soudage transversal pour favoriser la libération d'une enveloppe (8) à partir du film restant (27).

2. Dispositif selon la revendication 1, dans lequel ladite unité de commande (40) peut déterminer l'intensité et/ou la polarité du champ magnétique produit par lesdits premier (66a) et/ou second (66b) ensembles d'aimants.

3. Dispositif selon la revendication 1 ou 2, dans lequel ledit premier ensemble d'aimants (66a) comporte des aimants permanents, et ledit second élément d'aimants (66b) comporte des électroaimants.

4. Dispositif selon l'une quelconque des revendications précédentes, dans lequel les aimants desdits premier (66a) et second (66b) ensembles sont positionnés d'une manière équidistante les uns par rapport aux autres.

5. Dispositif selon l'une quelconque des revendications précédentes, dans lequel ledit stator est d'un type moteur électromagnétique, ledit second élément de support étant un siège de vis (70) d'un système à vis sans fin (62) relié audit moteur électromagnétique, qui est mobile de manière perpendiculairement audit flux de produits.

6. Dispositif selon la revendication 5, dans lequel lesdits seconds moyens d'actionnement (61) comportent des moyens de mise en marche (63), positionnés entre ledit siège de vis (70) et ledit élément de thermosoudage (68), pour provoquer une élévation forcée dudit élément de thermosoudage (68).

7. Dispositif selon la revendication 6, dans lequel lesdits moyens de mise en marche comportent des vérins pneumatiques (63).

8. Dispositif selon l'une quelconque des revendications précédentes, dans lequel ladite direction d'alimentation est sensiblement horizontale, et ladite direction perpendiculaire audit flux est sensiblement verticale.

9. Dispositif selon l'une quelconque des revendications précédentes, dans lequel le poste de soudage longitudinal comporte deux corps pouvant être chauffés (20, 26) agencés en série l'un après l'autre par rapport audit flux de produits.

10. Dispositif selon la revendication 9, dans lequel ledit poste de soudage longitudinal comporte un corps de préchauffage (20), disposé dans une position élevée par rapport audit flux, et un corps de soudage (26), positionné en aval dudit corps de préchauffage (20) par rapport audit flux, et capable de venir en contact avec ledit film (27).

11. Dispositif selon la revendication 10, dans lequel ledit corps de préchauffage (20) et ledit corps de soudage (26) comportent un thermorégulateur ayant son propre dispositif de commande, et qui peut être entraîné par ladite unité de commande (40).

12. Dispositif selon la revendication 10 ou 11, dans lequel ledit poste de soudage longitudinal comporte des moyens d'actionnement supplémentaires, entraînés par ladite unité de commande (40), pour modifier la distance dudit corps de préchauffage (20) à partir dudit film (27).

13. Dispositif selon l'une quelconque des revendications 10 à 12, dans lequel ledit poste de soudage longitudinal comporte un actionneur supplémentaire, commandé par ladite unité de commande (40), pour élever en même temps ledit corps de préchauffage (20) et ledit corps de soudage (26).

14. Dispositif selon l'une quelconque des revendications précédentes, comportant un poste de rassemblement pour rassembler lesdits produits (1) sur une première unité de transport (10), ledit poste d'enroulement positionnant ledit film (27) par rapport auxdits produits (1) sur une seconde unité de transport (12), dans lequel ladite première unité de transport (10) est entraînée par un premier moteur (43), et ladite seconde unité de transport (12) est entraînée par un second moteur (45), distinct dudit premier moteur (43), lesdits premier (43) et second (45) moteurs ayant des connexions de commande respectives avec ladite unité de commande (40).

15. Dispositif selon la revendication 14, dans lequel ladite première unité de transport (10) comporte des premiers capteurs (46), et ladite seconde unité de transport (12) comporte des seconds capteurs (47), lesdits premier (46) et second (47) capteurs étant capables d'envoyer des signaux de rétroaction vers ladite unité de commande (40) par l'intermédiaire de connexions de rétroaction respectives.

16. Dispositif selon la revendication 15, dans lequel lesdits premier (46) et second (47) capteurs sont des capteurs de position et/ou de vitesse.

17. Dispositif selon l'une quelconque des revendications précédentes, dans lequel ledit poste de soudage transversal (7) comporte deux éléments de thermosoudage (68', 68") fixés sur un bras de support (247) dudit premier élément de support (14), à une distance mutuellement ajustable dans ladite direction d'alimentation.

18. Dispositif selon l'une quelconque des revendications précédentes, dans lequel ledit poste de soudage transversal (7) comporte un premier (248) et un second (249) groupes de soudage, positionnés en série le long de ladite direction d'alimentation dudit flux de produits, chacun desdits premier (248) et second (249) groupes de soudage comportant des moteurs linéaires respectifs (66', 66"), des moyens d'actionnement (61', 61"), et un élément de thermosoudage respectif (68', 68"), lesdits premier (248) et second (249) groupes de soudage étant commandés par ladite unité de commande (40).

19. Dispositif selon la revendication 18, dans lequel lesdits moteurs linéaires (66', 66") desdits premier (248) et second (249) groupes de soudage comportent un premier ensemble unique commun d'aimants (66b).

20. Procédé de conditionnement par film, pour conditionner chaque produit (1) d'un flux dans une enveloppe (8) constituée d'un film thermosensible (27), comportant une étape d'enroulement, ledit film (27) étant positionné par rapport auxdits produits (1), une étape de soudage longitudinal, pour souder des volets longitudinaux dudit film (27) parallèlement audit flux, et une étape de soudage transversal, pour souder des parties transversales (272, 273) dudit film (27) transversalement audit flux par l'intermédiaire d'au moins un élément de thermosoudage (68), laquelle étape de soudage transversal comporte à son tour :
- une étape de mise en contact dudit élément de thermosoudage (68) et desdites parties transversales (272, 273) dudit film (27), ledit élément de thermosoudage (68) étant déplacé à une vitesse égale à la vitesse dudit flux de produits selon une trajectoire sensiblement rectiligne (111) dans la direction dudit flux de produits, et
- une étape de retour, ledit élément de thermosoudage (68) étant déplacé perpendiculairement audit flux de produits et parallèlement à celui-ci,
**caractérisé en ce que** l'étape de soudage transversal ci-dessus fournit une commande ponctuelle du déplacement et de la vitesse dudit élément de thermosoudage (68), parallèlement et perpendiculairement audit flux de produits, en permettant ainsi de produire une accélération de celui-ci parallèlement audit flux de produits à la fin de ladite étape de mise en contact pour favoriser la libération d'une enveloppe (8) à partir du film restant (27), et **en ce que** ladite étape de mise contact est obtenue par commande du champ magnétique entre un premier ensemble stationnaire d'aimants et un second ensemble d'aimants, lequel second ensemble est mobile parallèlement audit flux par rapport audit premier ensemble, et est connecté audit élément de thermosoudage.
